# EUROPEAN PATENT SPECIFICATION

(11) **EP 4 478 925 B1**
(45) Date of publication and mention of the grant of the patent: **11.02.2026**
(21) Application number: 23711577.9
(22) Date of filing: 17.02.2023
(51) Int. Cl.: A47J 42/40

(54) **APPARATUS AND METHOD FOR GRINDING SEEDS**
VORRICHTUNG UND VERFAHREN ZUM MAHLEN VON SAATGUT
APPAREIL ET PROCÉDÉ DE BROYAGE DE GRAINES

(30) Priority: 18.02.2022 IT 202200003047
(43) Date of publication of application: 25.12.2024
(73) Proprietor: La San Marco S.p.A., 34072 Gradisca d'Isonzo (GO) (IT)
(72) Inventor: NOCERA, Roberto, 34135 TRIESTE (IT); BOLZAN, Stefano, 34070 VILLESSE (GO) (IT); KRALJ, Stefano, 34010 SGONICO (TS) (IT)
(74) Representative: PGA S.p.A., Milano, Succursale di Lugano
(86) International application number: PCT/IT2023/050051
(87) International publication number: WO 2023/157039

(56) References cited:
- AT-B- 329 952
- CH-A- 322 964
- CH-A- 379 706
- DE-A1- 102011 050 486
- FR-A- 1 312 229
- IT-A1- 201800 020 035

## Description

### FIELD OF THE INVENTION

The present invention concerns an apparatus and method for grinding seeds, preferably toasted, deriving from plants for food use, such as for example coffee beans, barley seeds, or other similar cereals, usually used for preparing hot beverages such as, for example, espresso coffee, barley infusions and others.

### BACKGROUND OF THE INVENTION

In the field of machines for preparing hot beverages by infusing a powdered substance obtained by grinding toasted seeds, apparatuses for automatically grinding seeds are known.

Known apparatuses are commonly provided with a grinding chamber, into which the seeds to be ground are poured, and in which suitable grinding elements are provided, such as for example grinders, or rollers, shellers, rotating blades, mobile graters or other known elements. The grinding elements are commonly set in motion by an electric motor, in order to obtain a powdered substance with a desired granulometry, with which to prepare the beverage, for example by infusion.

Below, we will refer by way of example to the preparation of espresso coffee starting from the grinding of coffee beans, but it is clear that we can transfer the same concepts and the same disadvantages to the preparation of generic beverages, starting from the grinding of seeds from other food plants.

A first type of known apparatus is the type with what is called in jargon "a metering element", provided with a container which collects the coffee powder ground in the grinding chamber.

This type of known apparatus constantly supplies the ground coffee to the container so that, once a certain volume of powder has been removed, the electric motor is activated to grind an equivalent volume of coffee, so as to keep the container at a desired constant level of fullness.

However, this first type of apparatus has the limitation that it dispenses coffee which has been deposited and already ground previously, therefore at risk of oxidation, altering the organoleptic characteristics of the beverage.

A second type of grinding apparatus is of the type known in jargon as "on-demand", in which the apparatus comprises a conveyor which normally consists of a pipe located at the exit of the grinding chamber, to feed, for example, a filter-holder cup from which to prepare the espresso coffee.

The dose to be dispensed is generally defined by an electronic control system which, by driving an electric motor, starts the grinding action for the time necessary to reach the predefined quantity of ground coffee.

This second type of apparatus, compared to the first, was created to guarantee a higher organoleptic quality of the beverage dispensed, since the coffee is ground on each occasion, without oxidizing in contact with the air.

However, because of its conformation and the electrostatic effect due to certain grinding conditions or to the conditions of the materials normally used, a part of the coffee powder obtained tends to partly adhere to the internal surfaces of the pipe, remaining accumulated inside it.

Furthermore, currently pipes are conformed so as to direct the flow of powders directly toward an exit zone, in which a filter-holder cup can be positioned.

The powders coming out of the grinding device tend to impact on an internal surface of the pipes, emphasizing the effect of accumulation of the powders inside the pipe.

In this way, in the subsequent preparation cycles of the espresso coffee, the ground powder mixes with the powder accumulated inside the pipe and the latter, now oxidized, can alter the organoleptic characteristics of freshness and aroma that are desired to be obtained from the espresso coffee. The same disadvantage also causes poor repeatability of the quality of the beverage dispensed, to the detriment of the operational qualities of the apparatus.

Another disadvantage of these known solutions is that, since part of the ground powder tends to accumulate inside the pipe, at exit therefrom there will be a dose of coffee powder lower than that expected, so that the beverage obtained from it might not be extracted in the best way and therefore might not satisfy the tastes of the consumer.

The same known solution, due to the accumulation of the powder, in particular in the initial segment of the pipe, can cause a further grinding of the powder itself, causing the mechanical blocking of the grinding elements, with consequent increased times and costs of extraordinary maintenance.

Furthermore, the accumulated powders can form lumps which mix with the freshly ground powders, again, modifying the preparation conditions of the coffee.

Document CH 322964 A describes an apparatus for grinding coffee beans which is provided with a grinding chamber and a conveyor connected thereto so as to be able to vibrate, in which, in order to generate a vibration of the conveyor, the hub of a rotating disc is equipped with a cam which acts on a pin which, at the front end, presses against the conveyor. However, the solution described in CH 322964 A allows to obtain only a reduced amount of vibration, since the pin itself performs a negligible travel.

DE 10 2011 050486 A1 describes a machine for preparing coffee beverages which is provided with a grinding device and comprises a conveyor for the coffee powder and a vibratory unit designed as a pulse generator, which is connected to the conveyor.

The vibration of the conveyor, although it does prevent an accumulation of powder inside it, on the one hand leads to the generation of noise, given by the contact between the pin and the conveyor, in particular when the pin returns and knocks against the cam.

Documents AT 329 952 B, IT 2018 0002 0035 A1, CH 379 706 A and FR 1 312 229 A describe other known types of grinding apparatus which provide to apply a vibration to the conveyor.

Another disadvantage of known apparatuses which provide to make the conveyor vibrate is that this vibration entails a transfer of energy to the coffee powder which tends to accumulate an electrostatic charge. Consequently, when it comes out of the conveyor, a cloud of powder forms which, instead of falling by gravity into a suitable container, such as a filter-holder or a bag, tends to spread in the environment, depositing on the surrounding objects, thus determining a waste of ground material and the need to carry out frequent cleaning operations.

There is therefore a need to perfect a grinding apparatus of the type with a conveyor from the grinding chamber to the exit zone, which can overcome at least one of the disadvantages of the state of the art.

To do this, it is necessary to solve at least the technical problem of preventing the accumulation of powdered grain inside the pipe of the conveyor.

In particular, one purpose of the present invention is to provide a grinding apparatus of the type described above which substantially prevents the fortuitous mixing of the freshly ground powdered substance and the accumulated one, or the formation of lumps of powder, so as to obtain a high operating quality of the apparatus itself and, at the same time, a desired qualitative repeatability of the organoleptic characteristics of the beverage prepared with the powdered substance.

Another purpose of the present invention is to overcome the above disadvantages, limiting to a minimum the need to carry out extraordinary maintenance interventions due to the mechanical blocking of the grinding elements.

Another purpose is to provide a grinding apparatus which reduces noise to a minimum.

Another purpose of the present invention is to optimize the conveyance of the powdered grain inside the pipe in order to promote its exit, limiting to a minimum the accumulations due to direct contact with the internal surface of the pipe.

Another purpose of the present invention is to ensure a correct exit of the coffee powder from the conveyor, preventing possible spreading of the powder into the environment.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, an apparatus according to the present invention for grinding seeds comprises a grinding device for grinding the seeds into a powdered substance having a desired granulometry and a conveyor member able to convey the powdered substance toward the outside, for example toward an exit zone where a traditional filter holder cup or other equipment can be provided.

The grinding device can comprise, in a known manner, a grinding chamber and a grinding member which is conformed to grind the seeds.

In accordance with one aspect of the present invention, the apparatus also comprises oscillation means associated with the conveyor member. In particular, the oscillation means are disposed in cooperation with the conveyor member so as to selectively move the latter, with an action of alternating frequency movement, in order to obtain a movement of substantial vibration of the conveyor member.

Doing so achieves at least the advantage that the vibration limits the possibility that the powdered substance adheres to and accumulates on the internal surface of the conveyor member to a minimum, promoting its complete outflow toward the exit of the conveyor itself.

Consequently, once the powdered substance has been dispensed, the inside of the conveyor member remains substantially free of residual substance, that is, with an acceptable residual quantity and, in any case, not invalidating the characteristics of repeatability and organoleptic qualities required.

It is clear that, in doing so, the subsequent dispensations of freshly ground powdered substance do not find substantial quantities of residues from previous grindings inside the conveyor member.

Therefore, a beverage, prepared with the powdered substance freshly ground by the apparatus according to the present invention, keeps all the organoleptic characteristics peculiar to the food product substantially unchanged, to the advantage of the quantitative repeatability of the ground powder, the qualitative repeatability of the beverage and the operational quality of the grinding apparatus.

Consequently, the operational quality of any machine for preparing coffee, with which the apparatus according to the present invention is combined, is also increased.

Furthermore, thanks to the vibration of the conveyor, substantially the entire quantity of ground powdered substance reaches the exit zone, so as to supply a correct dose of powdered substance on each occasion, allowing to obtain a beverage with the correct intensity of taste.

Again as a consequence of the advantages achieved with the solution according to the present invention, the possible additional grinding of already ground powders is reduced to a minimum, with consequent reduction of the risk of a mechanical blockage of the grinding elements and, therefore, of correlated extraordinary maintenance operations.

According to another aspect of the apparatus according to the present invention, the conveyor member is mounted on the grinding device by means of support means, which define a physical and stable connection between the conveyor member and the grinding device, and at the same time allow the movement of the conveyor member with respect to the grinding device with at least one degree of freedom.

This guarantees both the correct and long-lasting connection between the conveyor member and the grinding device and also the possibility of free vibration of the conveyor member.

The apparatus also comprises drive means, which are connected to the grinding member in such a way as to induce a desired movement thereof in order to grind the seeds and obtain the powdered substance.

In accordance with another aspect of the present invention, the oscillation means comprise at least one propulsor, directly associated with the drive means to transform the motion generated thereby into an alternating frequency movement, and an actuator member, kinematically connected to the propulsor, to transmit this movement to the conveyor member.

Since this solution directly exploits the rotation of the drive means associated with the grinding member and therefore does not require auxiliary drive members, it is advantageous both in terms of costs and energy consumption, as well as in terms of overall dimensions.

According to another variant, the drive means are operatively associated with variation members, which are suitable to command a desired and selective variation of the grinding movement defined by the drive means, so as to maintain the action of vibration even at the end of the grinding steps.

This variation can be advantageously applied to prolong the action of the alternating frequency movement operated by the oscillation means, even at the end of the actual grinding of the seeds. In some specific operating conditions, such variation may provide an inversion of the direction of rotation of the grinding device.

In accordance with another aspect of the present invention, the oscillation means comprise a vibrating unit mounted directly on the conveyor member, in order to generate the alternating frequency movement directly thereon.

This solution is advantageous in that, since the vibrating unit is independent of the drive means, it allows to keep the conveyor member in vibration even when the grinding member has been stopped, so as to guarantee that even any minimum residues of powdered substance exit from the conveyor member.

In accordance with another aspect of the present invention, the oscillation means comprise both the propulsor and the actuator, and also the vibrating unit, to simultaneously and/or selectively transmit the alternating frequency movement to the conveyor member.

According to some embodiments, a damping element is provided inside the conveyor member, which is disposed transversely to the exit trajectory of the powdered substance.

The damping element can for example be made as a metal sheet, suitable to flex and absorb the impact of the powdered substance, thus helping to eliminate the electrostatic charge which accumulates thereon due to the rubbing between powder, grinders and grinding body during the grinding step. In this way, the powder without an electrostatic charge comes exits a vertical direction, without spreading into the environment.

In correspondence with the exit end of the conveyor member, a diffuser element can also be disposed, configured to convey the powdered substance in such a way that it exits by gravity in a substantially vertical direction and also to eliminate at least part of any residual electrostatic charge from it.

The combined use of the damping element and the diffuser allows to further improve the conveying of the powder and the elimination of electrostatic charges.

In accordance with another aspect of the present invention, the conveyor member comprises an arched shape, substantially corresponding to the exit trajectory of the powdered substance from the grinding chamber. In this way, the flow of powdered substance does not encounter direct obstacles, or large contact surfaces with the conveyor member, so as to further limit the possibility of deposit and accumulation of the powdered substance therein.

According to some embodiments, the conveyor member can comprise a first portion, disposed in proximity to the grinding chamber, which develops along a first median axis segment. This median axis is oriented substantially parallel to and aligned with the prevailing exit direction of the powdered grain from the grinding chamber. This conformation also contributes to further limit the contact between the powdered substance and the internal walls of the conveyor member.

Some embodiments described here also concern a method to grind seeds comprising grinding the seeds in a grinding device to obtain a powdered substance and conveying the powder toward the outside with a conveyor member. According to one aspect of the invention, the method provides to make the conveyor member vibrate at least during the grinding of the seeds by means of oscillation means associated with it.

Other embodiments concern an apparatus for grinding seeds comprising a grinding device, a conveyor member able to convey the powdered substance toward the outside, for example toward an exit zone where a traditional filter holder cup, or other equipment, can be provided and oscillation means associated with the conveyor member, wherein inside said conveyor member there is provided a damping element, configured for example in the form of a metal sheet, able to interfere with the powdered substance along the exit trajectory and eliminate any electrostatic charges from it.

In this way, the flow of powdered substance can exit in an orderly manner from the conveyor toward the filter holder cup or other equipment.

Consequently, once the powdered substance has been dispensed, the inside of the conveyor member remains substantially free of residual substance, or with an acceptable residual quantity and, in any case, one that does not invalidate the characteristics of repeatability and organoleptic qualities required.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an exploded view of an apparatus for grinding seeds according to the present invention;
- fig. 2 is a section view of a first embodiment of the apparatus of fig. 1;
- fig. 3 is a detailed view of a detail of fig. 2, in two operating conditions;
- fig. 4 is a section view of a second embodiment of the apparatus of fig. 1;
- fig. 5 is a section view of a third embodiment of the apparatus of fig. 1;
- figs. from 6 to 9 show as many variants of the detail of fig. 3;
- fig. 10 is an exploded view of an apparatus for grinding seeds in accordance with a variant of the invention;
- fig. 11 is a section view of the apparatus of fig. 10;
- fig. 12 is a section view of an apparatus for grinding seeds in accordance with another variant of the invention;
- fig. 13 is a detailed view of the oscillation means associated with the conveyor;
- fig. 14 is a top view of the oscillation means of fig. 13 inserted in a grinding device of an apparatus according to the invention;
- fig. 15 is a three-dimensional view of a detail of the oscillation means of fig. 13;
- figs. 16a-16b are plan views of some variants of the detail of fig. 15;
- figs. 17-19 show a variant of a conveyor of the apparatus according to the invention, respectively in a lateral, section and an exploded view.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

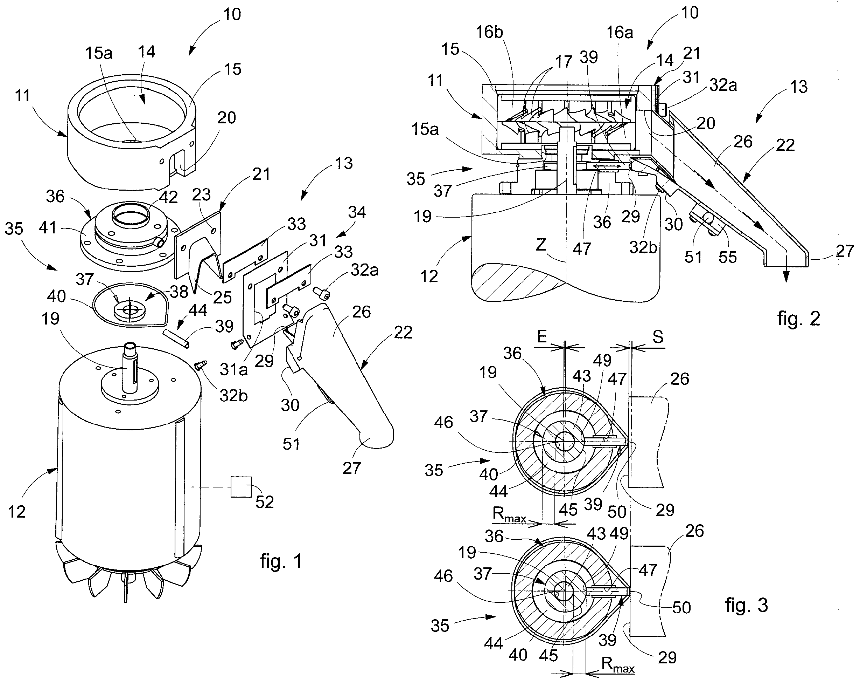

With reference to fig. 1, an apparatus 10 according to the present invention essentially comprises a grinding device 11 and a conveyor 13.

The apparatus 10 shown is designed for grinding seeds in order to obtain a desired powdered substance. The seeds can be, in particular, coffee beans, from which it is possible to obtain a powdered substance with a desired granulometry typically used for the preparation, by infusion, of espresso coffee or similar coffee-based beverages. The apparatus 10 according to the invention, however, can also be used to grind seeds or grains of other types, such as for example barley, cereals, or other seeds for food use, or even peppercorns or suchlike.

In particular, the grinding device 11 comprises a containing body 15 defining inside it a grinding chamber 14 and a pair of grinders, lower 16a and upper 16b, respectively, disposed in the body 15.

The body 15 has a substantially tubular cylindrical shape, it has a lower wall having a central aperture 15a and it is open at the top to allow the introduction by gravity of the seeds to be ground, containing them inside it.

Furthermore, its cylindrical conformation is such that the two grinders 16a and 16b can be disposed inside it one on top of the other, so as to rotate with respect to a longitudinal axis Y of the body 15 itself.

Each grinder 16a and 16b has a toroidal shape and is provided with a series of protuberances, or cutting teeth 17, which can be created, in part, along the internal circular perimeter and, in part, on an adjacent external surface (see fig. 2), so that if they are disposed axially facing each other, they define an intermediate grinding zone between them.

The apparatus 10 also comprises a drive member 12 connected to at least one of the grinders 16a, 16b, in order to move it and make it rotate.

In particular, the lower grinder 16a is keyed to the drive member 12, as will be explained in detail below, so that the latter can make it rotate.

The drive member 12 can be an electric motor of a substantially traditional type, therefore it will not be described in detail; however, we must clarify that it is provided with an exit shaft 19, through which it transmits a desired movement of rotation, supplying both a torque and also a speed of rotation to the grinding device 11.

From a functional point of view, the drive member 12 is disposed in cooperation with the grinding device 11 and, in particular, its exit shaft 19 is keyed to the lower grinder 16a so that the rotation of the latter, with respect to the corresponding upper grinder 16b, determines a reciprocal movement of the teeth or cutting edges 17.

In this way, the coffee beans introduced by gravity into the body 15 and deposited in the grinding zone are subjected to the action of the cutting edges 17, which grind them into powder. The reciprocal axial distance between the two grinders 16a and 16b, and therefore their cutting edges 17, determines the size of the grain of ground coffee powder.

The conveyor 13 is mounted on the external surface of the body 15, in correspondence with a lateral aperture 20 thereof, so that the ground powder can exit from the chamber 14 through the aperture 20 and be directed inside the conveyor 13.

In particular, the conveyor 13 substantially comprises a first fixed element 21 and a second oscillating element 22, which cooperate with each other.

The fixed element 21 comprises a flanged portion 23, by means of which it is directly fixed to the external surface of the body 15. This fixing occurs, in this case, by means of a pair of screws 32a, rivets or other. Moreover, the fixed element 21 comprises a shaped portion 25 which recalls the conformation of the lateral aperture 20 and protrudes substantially orthogonal to the lying plane of the flanged portion 23.

Furthermore, the shaped portion 25 has a size and a length such as to be able to be at least partly inserted inside the oscillating element 22, defining an overlap with it, so as to direct the coffee powder inside the oscillating element 22 and, at the same time, prevent it from exiting from the conveyor 13.

The oscillating element 22 has, in fact, a substantially tubular shape and comprises a first portion, or entry portion 26, and a second portion, or exit portion 27.

The entry portion 26 has a shape that is substantially tapered toward the exit portion 27.

The entry portion 26 also comprises an actuation surface 29, the latter being provided in a front zone, facing toward the grinding chamber 14, and an anchoring surface 30, by means of which it is elastically connected to the fixed element 21.

In fact, the operating connection between the fixed element 21 and the oscillating element 22 occurs by means of support means 34 suitable to allow a movement with at least one degree of freedom between one and the other.

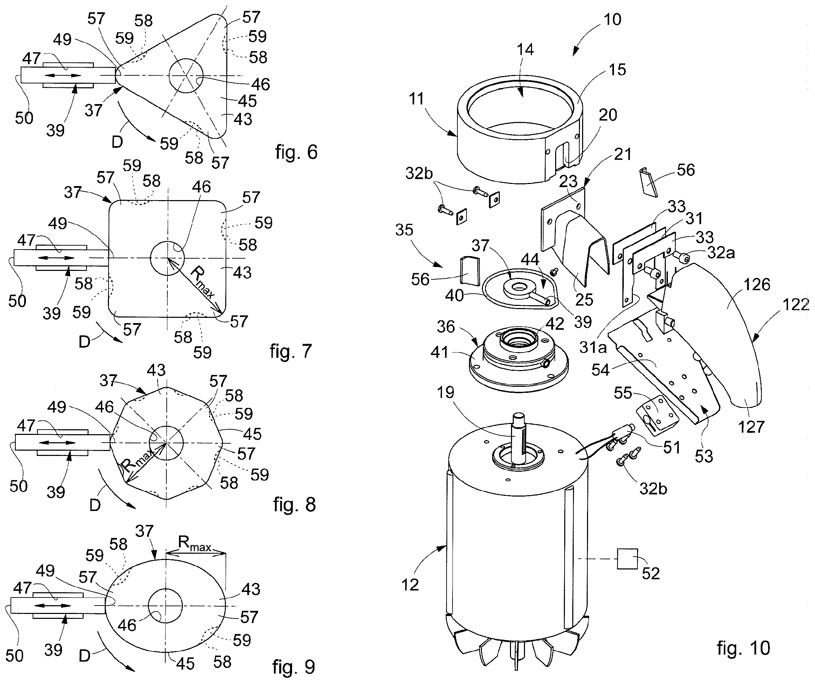

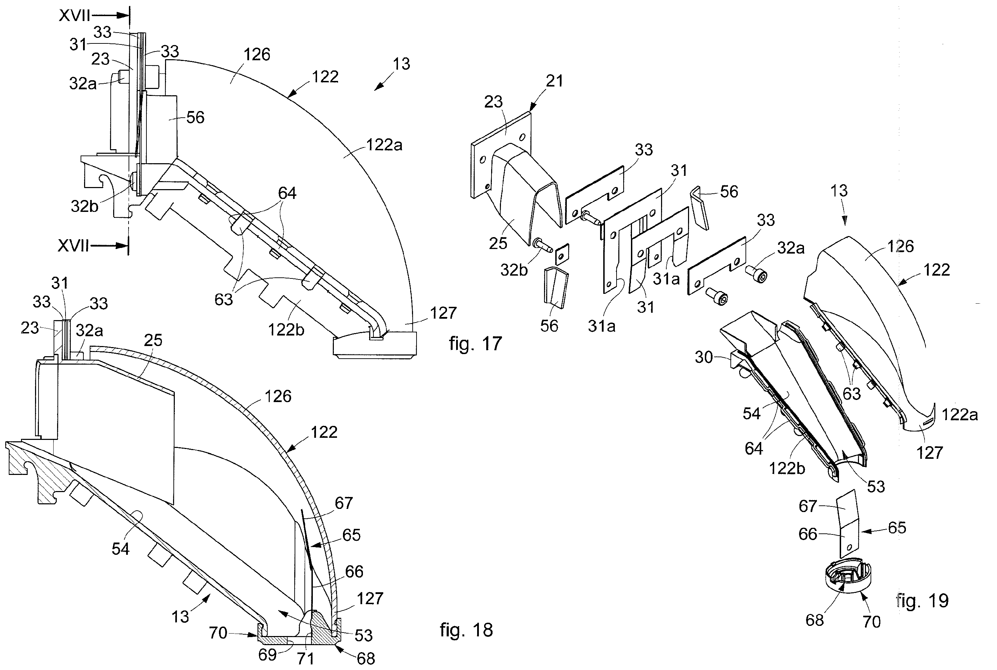

According to some embodiments, the support means 34 comprise at least one elastic element 31, for example a sheet of harmonic steel, which has a certain degree of elasticity and has, centrally, a passage hole 31a for the ground powder. For example, in the embodiments shown in figs. 1 and 10 there is only one elastic element 31, while in the embodiment shown in fig. 19 there are two elastic elements 31, disposed adjacent to each other during use.

The elastic element 31 is fixed, on one side, to the fixed element 21, for example by means of the same the pair of screws 32a which fix the latter to the external surface of the body 15 and, on the other side, to the anchoring surface 30 of the oscillating element 22, by means of another pair of screws 32b, rivets or suchlike. In the case of two elastic elements 31, these will be connected one to the fixed element 21 and the other to the anchoring surface 30, respectively.

In this way, the at least one elastic element 31 acts as an elastic connection between the two elements 21 and 22, so that, if suitably stressed, the oscillating element 22 can vibrate freely with respect to the fixed element 21 but, in any case, under the control of the elastic element 31.

In the solution shown in the drawings, two shims 33 are also provided, mounted on opposite parts to the elastic element 31, in correspondence with the fixing zone to the fixed element 21. These shims 33 are conformed in order to give a desired stiffness to the at least one elastic element 31, keeping its thickness unchanged.

On the sides of the at least one elastic element 31 and of the shims 33, gaskets 56 can be provided with the function of preventing possible leakages of the coffee powder.

According to an alternative variant to the elastic element 31, the assembly between the fixed element 21 and the oscillating element 22 can be performed by means of an elastic joint (not shown in the drawings), which joins the grinding chamber 14 to the mobile part of the conveyor 13. It is substantially equivalent to provide other known elastic elements having the function of supporting the mobile part of the conveyor 13, allowing it to vibrate.

According to possible variants (not shown), the support means 34 can also provide slots created in the elastic element 31 in which pins connected to the oscillating element 22 can move, so as to allow a movement of partial rotation thereof with respect to the fixed element 21.

According to another variant (not shown), the conveyor 13 can be made in a single oscillating element, mounted directly on the body 15, according to one or the other of the solutions disclosed heretofore.

The apparatus 10 according to the present invention also comprises oscillation means 35, 51, as will be better described below, which are configured to stress the conveyor member 13 so as to make it vibrate.

According to some embodiments, a first oscillation member 35 comprises at least one propulsor member 38, directly associated with the drive member 12 in order to transform the motion generated by the latter into a reciprocating motion, that is, an alternating frequency movement, and an actuator member 44, kinematically connected to the propulsor member 38, in order to transmit this movement onto the conveyor member 13.

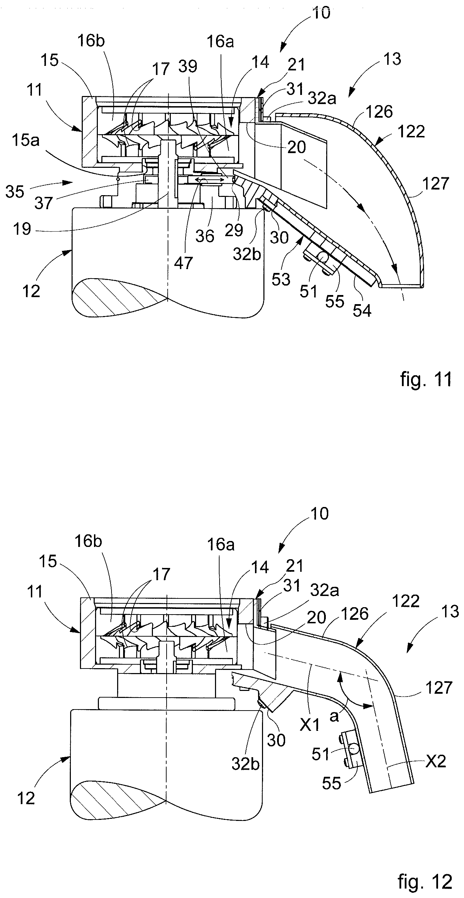

In the embodiment shown in figs. 1-4, 11, 13-14, between the grinding device 11 and the drive member 12 there is mounted a first oscillation member 35, substantially consisting of a support structure 36, an eccentric element or cam 37, which acts as a propulsor 38, a cam follower rod 39, which acts as an actuator member 44, and an elastic return element 40.

The support structure 36 is drilled axially in order to house the exit shaft 19 in a through manner, and it comprises a flange 41, which is conformed and disposed to allow the direct fixing, for example by means of bolts and screws not shown, to the drive member 12, in a manner that is substantially concentric to the exit shaft 19.

The support structure 36 also comprises, on the opposite part to the flange 41, a cylindrical coupling 42, which is conformed to be connected by insertion into the corresponding aperture 15a of the body 15. In this way, the support structure 36 is mounted between the drive member 12 and the grinding device 11.

In particular, the support structure 36 is disposed between the drive member 12 and the grinding chamber 14.

Furthermore, the support structure 36 has an internal housing seating 44 suitable for the kinematic housing of the eccentric element or cam 37.

In the solution shown in figs. 1, 2 and 3, the eccentric element or cam 37 comprises a rotating body 43, in the example case having a substantially circular shape, defining a continuous perimeter surface 45, and a central hole 46, the latter being disposed axially eccentric for a certain value "E", with respect to the geometric center of rotation of the rotating body 43.

The eccentric element or cam 37 is keyed to the exit shaft 19, by means of a keyed coupling between its central hole 46 and the exit shaft 19 itself.

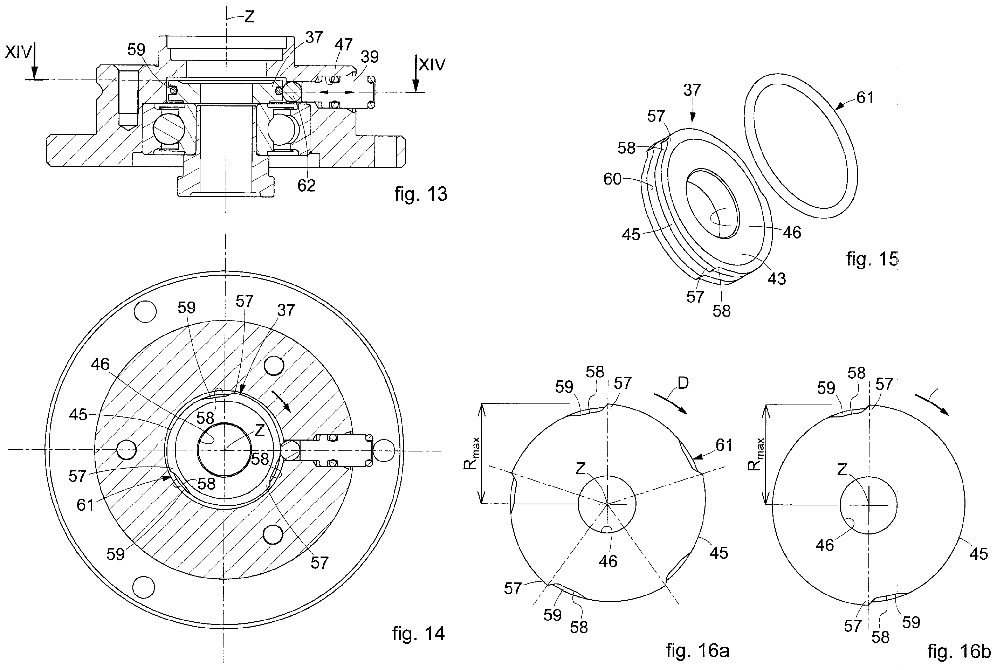

According to preferred embodiments, described in greater detail with reference to figs. 13-16b, the rotating body 43 has at least one protruding portion 57, in correspondence with which the radius of the cam 37 has a maximum value Rmax, and one recessed portion 58 disposed downstream of said protruding portion 57 with respect to a direction of rotation D of said cam 37.

The perimeter surface 45 preferably has a step in correspondence with the passage between the protruding portion 57 and the recessed portion 58.

In correspondence with the recessed portion 58 the cam 37 has a radius smaller than the maximum value Rmax, smaller than the radius in correspondence with which the radius of the cam 37.

By the term "radius" here and hereafter in the description with reference to the cam 37 we generally mean the distance between a point on the perimeter surface 45 and the central hole 46 which, during use, is disposed coaxial to the longitudinal axis Z.

In correspondence with the recessed portion 58 there is disposed a striker element 59 made of elastic material, configured to absorb the impact of the actuator member 44 in its return stroke.

The abutment element 59 is preferably made of a soft material so that it can act as a padding and dampen any noise.

The rotating body 43 can be made of a rigid material, for example a metal material such as steel or suchlike.

According to preferred embodiments, the cam 37 has a perimeter surface 45 having a radius that progressively increases in the segment between a recessed portion 58 toward the apex of a subsequent protruding portion 57 in the opposite direction to the direction D of rotation.

According to the embodiments shown in figs. 13-15, the rotating body 43 has a tri-lobed plan shape, comprising three protruding portions 57, each having a radius Rmax, followed by respective recessed portions 58, in each of which a abutment element 59 is disposed.

Preferably, the radius of the cam 37 in correspondence with the abutment element 59 is smaller than the maximum radius Rmax and can correspond to a minimum value Rmin.

The segments that connect each recessed portion 58 to a subsequent protruding portion 58, and in particular the points in correspondence with the respective radii Rmin and Rmax, may have an arched shape. In this way, the actuator member 44, and in particular the cam follower element 39, is progressively thrust toward the conveyor 13 by the arched shape of the perimeter surface 45 and in correspondence with the recessed portion 58, thanks to the step between the latter and the protruding portion 57, it goes back, resting on the abutment element 59.

According to possible embodiments, the rotating body 43 can have a perimeter groove 60 in which a ring gasket 61 is disposed so that in correspondence with each recessed portion 58 it is disposed protruding with respect to the rotating body 43 so as to define the respective abutment elements 59, while in correspondence with the protruding portions 57 and with at least part of the connection segments it is disposed flush with or reentrant with respect to the rotating body 43.

In this way, it is possible to easily replace the ring gasket 61 when it wears out.

According to some embodiments, a ball element 62 can also be provided disposed between the perimeter surface 46 of the cam 37 and the cam follower element 39, and cooperating with them in order to transfer the rotary motion into reciprocating motion.

Providing a ball 62 in an intermediate position between the cam 37 and the cam follower element 39 allows to follow the development of the perimeter surface 46 in a more uniform and homogeneous manner, helping to reduce noise and increase efficiency.

Figs. 16a and 16b show examples of possible variants, respectively with five and with two pairs of protruding portions 57/recessed portions 58, although in other embodiments the number may be different. Also in this case, it can be provided that the abutment elements 59 are created by a ring gasket 61 disposed inside a special perimeter groove 60. The support structure 36 can also comprise a guide seating 47 created radially at the height of the rotating body 43 and able to house the cam follower rod 39, and possibly the ball 62, if present, so that it/they can slide freely in a longitudinal direction, that is, radially with respect to the longitudinal axis Z.

In particular, the guide seating 47 has a section with a conformation corresponding to the section of the cam follower rod 39 and of the ball 62, if present, such as to allow the movement thereof only in the longitudinal direction.

The cam follower rod 39 comprises a first end 49 facing, during use, toward the perimeter surface 45 of the eccentric element 37. This first end 49 is conformed in such a way as to allow an effective contact with the perimeter surface 45 or possibly with the ball 62.

Moreover, the cam follower element 39 comprises a second end 50 facing, during use, toward the actuation surface 29 of the oscillating element 22. This second end 50 can be conformed in such a way as to allow both an effective contact with the actuation surface 29 as well as an effective contact with the oscillating element 22.

The elastic 40 has a substantially annular shape and is advantageously made of silicone material, or other similar material with an elastic capacity sufficient for its functionality. The elastic 40 is disposed partly around an external surface of the support structure 36 and inserted into a seating of the oscillating element 22. In this way, its elastic action tends to normally keep the first surface 49 of the cam follower rod 39, through the contact with the oscillating element 22, in contact with the perimeter surface 45 of the rotating body 43.

In this way, each rotation of the eccentric element, or cam 37, corresponds to an alternating longitudinal movement, with a stroke "S", of the cam follower element 39 inside the guide seating 47 and, consequently, a thrust of the oscillating element 22 against the actuation surface 29 (fig. 3). This kinematic mechanism, by exploiting the elasticity of the elastic element 31 and its assembly between the fixed element 21 and the oscillating element 22, determines a reciprocating or vibrating movement of the latter with respect to the fixed element 21 and consequently determines a vibration of the conveyor 13.

In the alternative solutions schematized in figs. from 6 to 9, we wish to highlight that the rotating body 43 can have alternative shapes to the circular one described heretofore.

By way of example, in these drawings the position of the recessed portions 58 has been indicated in dotted lines, each recessed portion 58 being disposed adjacent to a respective protruding portion 57 downstream of the latter with respect to the direction of rotation of the cam 37.

As is evident, each of these variants represents a different frequency of alternating longitudinal movement of the cam follower element 39. In fact, as a function of the actual vibration requirements, the rotating body 43 can be freely designed in order to adapt the speeds of rotation of the drive member 12 to the actual frequencies and speeds of vibration required in order to optimize the desired effect. The embodiments shown in figs. from 6 to 9 allow to obtain three, four, eight and two thrusts, respectively, of the oscillating element 22 for each rotation of the rotating body 43.

In particular, while in the case of a drive member 12 with a high number of revolutions, for example comprised between 900 and 1200 rpm, it may be sufficient to stress the oscillating element 22 only once for each revolution, in the case of a drive member 12 with a lower number of revolutions, around 400-600 rpm, it is preferable to stress the oscillating element 22 two or more times for each revolution. In fact, it has been found that in order to achieve an efficient vibration effect for the purpose of removing the powdered substance from the conveyor 13, it is preferable to have a high frequency of vibration even if with a limited amplitude.

In the embodiment shown in figs. 1, 2, 5 and 10-12, a vibrating motor 51 is provided, which is directly fixed on the conveyor 13, and in particular on the oscillating element 22.

For example, the vibrating motor 51 can be fixed to the conveyor 13 by means of a support element 55.

The drive of the vibrating motor 51 occurs through an external electric power supply, and its action determines a vibration of the oscillating element 22 with respect to the fixed element 21, substantially equivalent to the one obtained by the system with rotating body or cam 37 and cam follower rod 39 described previously.

It is clear that the vibrating motor 51 can be replaced, according to some variants, by an electromagnetic device, a solenoid or other.

In the solution shown in figs. 1 and 2, the vibration is actuated by a desired combination between the mechanical action of the oscillation member 35, and the action generated by the vibrating motor 51.

Furthermore, the cutting edges 17 have an inclination whereby they perform the action of grinding the seeds only in the condition in which the lower grinder 16a is rotated according to a desired direction of rotation.

This aspect can be advantageously exploited according to the present invention since, by associating variation members 52 with the drive member 12, it is possible to selectively command a reversal of the rotation of the lower grinder 16a.

By way of example, the variation members 52 can comprise an inverter, or other known device not shown in detail in the attached drawings.

By doing so, the vibrating action exerted on the conveyor 13 is maintained, substantially without continuing with the grinding, but allowing the oscillation member 35 to continue its oscillating function and to expel other residues of previously ground coffee present in the grinding chamber 14.

With this advantageous solution, it is possible to provide a cycle for cleaning the residues of ground coffee which were deposited both in the grinding chamber 14 and also inside the conveyor 13 the instant the rotation of the motor was interrupted. These residues are generally a percentage value of at least 10% of the dose of ground coffee required for the preparation of a single espresso coffee.

Moreover, by keeping the drive member 12 rotating even if in the opposite direction, it is also possible to keep possible blades rotating, not shown in the drawings and normally associated with the lower grinder 16a, which can then continue their function to expel the residues of previously ground coffee from the grinding chamber 14.

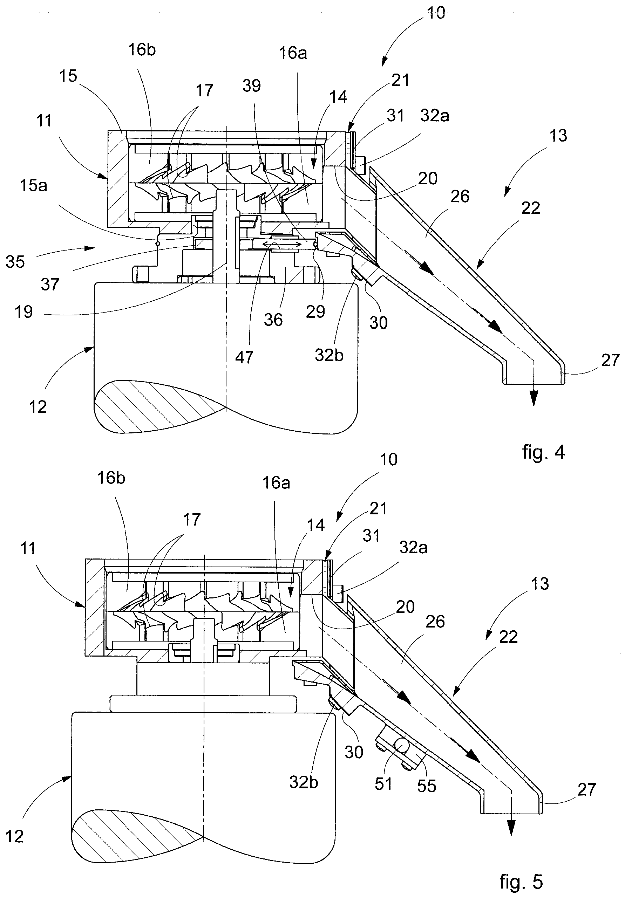

In the variant shown in fig. 4, the vibration is actuated by the mechanical action of the oscillation member 35.

In the solution of fig. 5, the vibration is actuated only by the vibrating motor 51.

Figs. 10, 11 and 12 show a variant of the apparatus 10, as shown and described in the solutions represented in figs. 2, 4 and 5, respectively.

In this case, this variant differs from the previous solutions described in that the conveyor 13 has an arched shape, substantially corresponding to the exit trajectory of the powdered substance from the grinding chamber 14.

In particular, according to the present invention, the conveyor 13 comprises an oscillating member 122 having an arched shape.

According to some embodiments, the oscillating member 122 comprises a first portion, or entry portion 126, which develops along a first median axis segment X1. The first segment X1 is oriented substantially parallel and aligned to the prevailing exit direction of the powdered grain from the aperture 20 of the body 15.

In this way, the internal walls of the entry portion 126 mainly act as a guide, with a limited barrier effect with respect to the natural direction of the flow of powder. It is clear that in this way the risk of sediment caused by the impact of the powders inside the entry portion 126 is further limited.

In these same variants, the oscillating member 122 also comprises a second portion, or exit portion 127, following the entry portion 126, which develops along a second median axis segment X2. In particular, the second segment X2 is angled, by a desired angle "a", with respect to the first segment X1, so as to orient the exit portion 127 toward the zone of desired outward conveyance of the powdered grain.

According to the embodiments described, for example, with reference to figs. from 10 to 12 and from 17 to 19, the entry portion 126 and the exit portion 127 are located in continuity with each other, overall defining an upper wall which, in section, has a substantially parabolic development, and a substantially rectilinear lower wall.

According to another variant (not shown), the entry portion 126 has an orientation substantially tangential to the body 15, in correspondence with the aperture 20, so as to further accommodate the exit direction of the powders, in the case of grinding by rotation.

According to some embodiments, a recovery conveyor 53 can also be provided, disposed below the conveyor 13, configured to recover any powders exiting from the body 15 and convey them toward the exit of the conveyor 13. The recovery conveyor 53 can comprise a substantially flat bottom wall 54 on which the support 55 of the vibrating motor 51 can be fixed.

According to other embodiments described with reference to fig. 19 and able to be combined with the other embodiments of figs. 1-5 and 10-11, the oscillating member 22, 122 can be made in two separate parts 122a, 122b, one comprising the upper wall and the other comprising the lower wall, which can be connected to each other by means of removable fixing means 63, 64, preferably of the type with same-shape, snap-in or interlocking coupling, for example comprising respective teeth or hooks which can be inserted into suitable mating seatings so as to facilitate their cleaning.

According to other embodiments, which can also be combined with the embodiments of figs. 1-5 and 10-12 even if not directly shown therein, a damping element 65 can be provided inside the conveyor member 13, disposed transversely to the exit trajectory of the powdered substance.

The damping element 65 can be made, for example, as a metal sheet, for example in harmonic material, suitable to flex and absorb the impact of the powdered substance, thus helping to eliminate the electrostatic charge which accumulates thereon due to the rubbing between powder, grinders 16a and 16b and grinding device 11 during the grinding step.

According to some embodiments, the damping element 65 can have a substantially flat shape, comprising a first part 66 and a second part 67, which are slightly inclined with respect to each other.

The first part 66 can be configured to act as a support, while the second part 67 can be configured to flex with greater amplitude.

The first part 66, during use, can be disposed in a vertical direction so as to act as a striker for the powdered substance toward the exit, and the second part 67 can be slightly inclined toward the entry of the oscillating element 22, 122.

According to possible embodiments, a diffuser 68 can also be arranged in correspondence with the exit end of the conveyor member 13, configured to convey the powdered substance in such a way that it exits by gravity in a substantially vertical direction.

The diffuser 68 has the function of diffusing the powder in such a way that it is distributed over the area of the exit section and descends uniformly in a vertical direction, however preventing a diffusion of the powder in other directions in correspondence with the exit end.

The diffuser 68 can be provided with one or more through holes 69, which have sizes that are suitable and wide enough to convey the outgoing powder without the risk of creating obstructions.

The diffuser 68 can be integrated, for example, in a closing element 70 connectable to the exit end of the oscillating body 22, 122, which can also be provided with support means 71 or with possible fixing means, suitable to cooperate with the damping member 65 in order to keep it in position.

Some embodiments described here also concern a method to grind seeds, in particular for food use, comprising grinding the seeds in the grinding device 11, in particular by driving the drive member 12 in order to rotate at least one grinder 16a, 16b and obtaining a powdered substance, and conveying the powder obtained toward the outside by means of the conveyor member 13.

The method according to the invention also provides to make the conveyor member 13 vibrate at least during the grinding by means of the oscillation means 35, 51 associated therewith, in order to facilitate the exit of the powder and prevent or at least limit the accumulation thereof on the internal walls.

The method according to the invention can also provide to make the conveyor member 13 vibrate and/or keep it vibrating even at the end of the grinding, by driving variation members 52 which are operatively associated with the drive member 12 of the grinding device 11 (see for example figs. 1 and 10).

In particular, the variation members 52 can be selectively commanded to reverse the rotation of the drive member 12 and therefore of the grinder 16a, in order to stop the grinding of the seeds but at the same time continue to move the oscillation member 35.

It is clear that modifications and/or additions of parts may be made to the apparatus 10 and to the method as described heretofore, without departing from the field and scope of the present invention, as defined by the claims.

It is also clear that, although the present invention has been described with reference to some specific examples, a person of skill in the art will be able to achieve other equivalent forms of apparatus 10 and method for grinding seeds, having the characteristics as set forth in the claims and hence all coming within the field of protection defined thereby.

In the following claims, the sole purpose of the references in brackets is to facilitate their reading and they must not be considered as restrictive factors with regard to the scope of protection defined by the same claims.

## Claims

1. Apparatus for grinding seeds comprising a grinding device (11) provided with drive means (12), a conveyor member (13) able to convey powder of said seeds toward the outside, and oscillation means (35, 51) associated with said conveyor member (13) and comprising a propulsor member (38) provided with a cam (37) keyed to a shaft (19) of said drive means (12) and able to transform the motion generated by said drive means (12) into a reciprocating motion, and an actuator member (44) provided with a cam follower element (39) disposed between said propulsor member (38) and said conveyor member (13) and able to transmit said reciprocating motion to said conveyor member (13), wherein said cam (37) comprises a rotating body (43) provided with a central hole (46), with at least one protruding portion (57) in correspondence with which a radius of said cam (37) has a maximum value (Rmax) and a recessed portion (58) downstream of said protruding portion (57) with respect to a direction (D) of rotation, during use, of said cam (37), **characterized in that** an abutment element (59) made of elastic material is arranged in correspondence with said recessed portion (58).

2. Apparatus (10) as in claim 1, **characterized in that** said rotating body (43) comprises a perimeter groove (60) in which a ring gasket (61) is arranged in such a way that, in correspondence with said at least one recessed portion (58), the ring gasket (61) is protruding with respect to said rotating body (43) and defines said abutment element (59), while in correspondence with said at least one protruding portion (57) and at least part of the connection segments the ring gasket (61) is disposed flush with or recessed with respect to said rotating body (43).

3. Apparatus (10) as in claim 1 or 2, **characterized in that** said actuator member (44) comprises a ball element (62) arranged between a perimeter surface (46) of the cam (37) and said cam follower element (39).

4. Apparatus (10) as in any one of the preceding claims, **characterized in that** said oscillation means (35) comprise an elastic retention element (40) arranged in cooperation between said propulsor member (38) and said actuator member (44), and able to exert an elastic pressure on said actuator member (44) so as to keep it normally in contact with said propulsor member (38).

5. Apparatus (10) as in any one of the preceding claims, **characterized in that** said conveyor member (13) is mounted on said grinding device (11) by means of support means (34) able of both defining a physical and stable connection, and allowing movement with at least one degree of freedom of said conveyor member (13) with respect to said grinding device (11).

6. Apparatus (10) as in claim 5, **characterized in that** said support means (34) comprise blocking elements (32a) able to fix a first portion (21) of said conveyor member (13) to said grinding device (11), and at least one elastic element (31) able to cushion a second portion (22, 122) of said conveyor member (13) with respect to said grinding device (11), during the alternating frequency movement provided by said oscillation means (35, 51).

7. Apparatus (10) as in any one of the preceding claims, **characterized in that** said oscillation means include a vibrating unit (51) mounted on said conveyor member (13) able to generate said alternating frequency movement in order to transmit simultaneously and/or selectively with respect to said propulsor member (38) said alternating frequency movement to said conveyor member (13).

8. Apparatus (10) as in any one of the preceding claims, **characterized in that** it comprises a damping element (65) positioned inside said conveyor member (13) and arranged transversely to an exit trajectory of said powdered substance.

9. Apparatus (10) as in claim 8, **characterized in that** said damping element (65) is made in the form of a sheet and comprises a first (66) and a second part (67) inclined with respect to each other.

10. Apparatus as in any one of the preceding claims, **characterized in that** a diffuser (68) is arranged in correspondence with an exit end of said conveyor member (13), said diffuser (68) being configured to convey the powdered substance in such a way that it exits by gravity in a substantially vertical direction.

11. Apparatus (10) as in any one of the preceding claims, **characterized in that** said conveyor member (13) has an arched shape, substantially corresponding to an exit trajectory of the powdered substance from said grinding device (11).

12. Apparatus (10) as in claim 11, **characterized in that** said conveyor member (13) comprises an upper wall which, in section, has a substantially parabolic development, and a substantially rectilinear lower wall.

13. Apparatus (10) as in claim 11 or 12, **characterized in that** said conveyor member (13) has a substantially tubular shape and is provided with a first portion (126), developing along a first segment (X1) oriented substantially parallel to and aligned with the prevailing exit direction of the powdered substance from said grinding device (11), and a second portion (127), following said first portion (126), developing along a second segment (X2) angled with respect to said first segment (X1) and oriented toward an exit zone of the powdered substance.

14. Method of grinding seeds comprising grinding said seeds in a grinding device (11) as in any claim from 1 to 13 in order to obtain a powdered substance and conveying said powder toward the outside with a conveyor member (13), **characterized in that** the method provides for vibrating said conveyor member (13) at least during said grinding by means of said oscillation means (35, 51) associated therewith.

15. Method as in claim 14, **characterized in that** it provides for vibrating said conveyor member (13) and/or keeping it vibrating even at the end of said grinding, by driving variation members (52) operatively associated with drive means (12) of said grinding device (11) in order to reverse their rotation.

## Patentansprüche

1. Vorrichtung zum Mahlen von Samen, umfassend eine Mahleinrichtung (11), welche mit Antriebsmitteln (12), einem Förderelement (13), welches dazu in der Lage ist, Pulver der Samen in Richtung des Äußeren zu fördern, und Schwingungsmitteln (35, 51) bereitgestellt ist, welche dem Förderelement (13) zugeordnet sind und ein Vortriebselement (38), welches mit einem Nocken (37) bereitgestellt ist, welcher auf eine Welle (19) der Antriebsmittel (12) gekeilt ist und dazu in der Lage ist, die durch die Antriebsmittel (12) erzeugte Bewegung in eine hin- und hergehende Bewegung zu übertragen, und ein Aktuatorelement (44) umfassen, welches mit einem Nockenfolgerelement (39) bereitgestellt ist, das zwischen dem Vortriebselement (38) und dem Förderelement (13) angeordnet ist und dazu in der Lage ist, die hin- und hergehende Bewegung auf das Förderelement (13) zu übertragen, wobei der Nocken (37) einen mit einem zentralen Loch (46) bereitgestellten Drehkörper (43) mit wenigstens einem vorstehenden Abschnitt (57), in dessen Einklang ein Radius des Nockens (37) einen maximalen Wert (Rmax) aufweist, und einem dem vorstehenden Abschnitt (57) in Bezug auf eine Drehrichtung (D) des Nockens (37) während einer Verwendung nachgelagerten vertieften Abschnitt (58) umfasst, **dadurch gekennzeichnet, dass** ein aus einem elastischen Material hergestelltes Anschlagelement (59) im Einklang mit dem vertieften Abschnitt (58) angeordnet ist.

2. Vorrichtung (10) nach Anspruch 1, **dadurch gekennzeichnet, dass** der Drehkörper (43) eine Umfangsnut (60) umfasst, in welcher eine Ringdichtung (61) in einer derartigen Weise angeordnet ist, dass im Einklang mit dem wenigstens einen vertieften Abschnitt (58) die Ringdichtung (61) in Bezug auf den Drehkörper (43) vorsteht und das Anschlagelement (59) definiert, während im Einklang mit dem wenigstens einen vorstehenden Abschnitt (57) und wenigstens einem Teil der Verbindungssegmente die Ringdichtung (61) bündig mit oder vertieft in Bezug auf den Drehkörper (43) angeordnet ist.

3. Vorrichtung (10) nach Anspruch 1 oder 2, **dadurch gekennzeichnet, dass** das Aktuatorelement (44) ein Kugelelement (62) umfasst, welches zwischen einer Umfangsfläche (46) des Nockens (37) und dem Nockenfolgerelement (39) angeordnet ist.

4. Vorrichtung (10) nach jeglichem der vorhergehenden Ansprüche, **dadurch gekennzeichnet, dass** die Schwingungsmittel (35) ein elastisches Halteelement (40) umfassen, welches in Zusammenwirkung zwischen dem Vortriebselement (38) und dem Aktuatorelement (44) angeordnet ist und dazu in der Lage ist, einen elastischen Druck auf das Aktuatorelement (44) auszuüben, um es normalerweise in Kontakt mit dem Vortriebselement (38) zu halten.

5. Vorrichtung (10) nach jeglichem der vorhergehenden Ansprüche, **dadurch gekennzeichnet, dass** das Förderelement (13) mittels Halterungsmitteln (34), welche dazu in der Lage sind, sowohl eine physische und stabile Verbindung zu definieren als auch eine Bewegung mit wenigstens einem Freiheitsgrad des Förderelements (13) in Bezug auf die Mahleinrichtung (11) zu ermöglichen, an der Mahleinrichtung (11) montiert ist.

6. Vorrichtung (10) nach Anspruch 5, **dadurch gekennzeichnet, dass** die Halterungsmittel (34) Blockierelemente (32a), welche dazu in der Lage sind, einen ersten Abschnitt (21) des Förderelements (13) an der Mahleinrichtung (11) zu fixieren, und wenigstens ein elastisches Element (31) umfassen, welches dazu in der Lage ist, während der durch die Schwingungsmittel (35, 51) bereitgestellten Bewegung mit wechselnder Frequenz einen zweiten Abschnitt (22, 122) des Förderelements (13) in Bezug auf die Mahleinrichtung (11) zu dämpfen.

7. Vorrichtung (10) nach jeglichem der vorhergehenden Ansprüche, **dadurch gekennzeichnet, dass** die Schwingungsmittel eine an dem Förderelement (13) montierte Vibrationseinheit (51) umfassen, welche dazu in der Lage ist, die Bewegung mit wechselnder Frequenz zu erzeugen, um die Bewegung mit wechselnder Frequenz in Bezug auf das Vortriebselement (38) simultan und/oder selektiv auf das Förderelement (13) zu übertragen.

8. Vorrichtung (10) nach jeglichem der vorhergehenden Ansprüche, **dadurch gekennzeichnet, dass** sie ein Dämpfungselement (65) umfasst, welches innerhalb des Förderelements (13) positioniert ist und transversal zu einer Austrittstrajektorie der pulverförmigen Substanz angeordnet ist.

9. Vorrichtung (10) nach Anspruch 8, **dadurch gekennzeichnet, dass** das Dämpfungselement (65) in der Form einer Platte ausgeführt ist und einen ersten (66) und einen zweiten Teil (67) umfasst, welche in Bezug aufeinander geneigt sind.

10. Vorrichtung nach jeglichem der vorhergehenden Ansprüche, **dadurch gekennzeichnet, dass** im Einklang mit einem Austrittsende des Förderelements (13) ein Diffusor (68) angeordnet ist, wobei der Diffusor (68) dazu eingerichtet ist, die pulverförmige Substanz in einer derartigen Weise zu fördern, dass sie durch Schwerkraft in einer im Wesentlichen vertikalen Richtung austritt.

11. Vorrichtung (10) nach jeglichem der vorhergehenden Ansprüche, **dadurch gekennzeichnet, dass** das Förderelement (13) eine gewölbte Form aufweist, welche im Wesentlichen einer Austrittstrajektorie der pulverförmigen Substanz aus der Mahleinrichtung (11) entspricht.

12. Vorrichtung (10) nach Anspruch 11, **dadurch gekennzeichnet, dass** das Förderelement (13) eine obere Wand, welche in einem Querschnitt einen im Wesentlichen parabolischen Verlauf aufweist, und eine im Wesentlichen geradlinige untere Wand umfasst.

13. Vorrichtung (10) nach Anspruch 11 oder 12, **dadurch gekennzeichnet, dass** das Förderelement (13) eine im Wesentlichen rohrförmige Form aufweist und mit einem ersten Abschnitt (126), welcher entlang eines ersten Segments (X1) verläuft, welches im Wesentlichen parallel zu und ausgerichtet mit der vorherrschenden Austrittsrichtung der pulverförmigen Substanz aus der Mahleinrichtung (11) orientiert ist, und einem auf den ersten Abschnitt (126) folgenden zweiten Abschnitt (127) bereitgestellt ist, welcher entlang eines zweiten Segments (X2) verläuft, welches in Bezug auf das erste Segment (X1) angewinkelt ist und in Richtung eines Austrittsbereichs der pulverförmigen Substanz orientiert ist.

14. Verfahren zum Mahlen von Samen, umfassend ein Mahlen der Samen in einer Mahleinrichtung (11) nach jeglichem Anspruch von 1 bis 13, um eine pulverförmige Substanz zu erhalten, und ein Fördern des Pulvers in Richtung des Äußeren mit einem Förderelement (13), **dadurch gekennzeichnet, dass** das Verfahren ein in Vibration versetzen des Förderelements (13) wenigstens während des Mahlens mittels der diesem zugeordneten Schwingungsmittel (35, 51) bereitstellt.

15. Verfahren nach Anspruch 14, **dadurch gekennzeichnet, dass** es selbst an dem Ende des Mahlens ein in Vibration versetzen des Förderelements (13) und/oder ein in Vibration halten desselben durch ein Antreiben von Vibrationselementen (52) bereitstellt, welche betriebsmäßig Antriebsmitteln (12) der Mahleinrichtung (11) zugeordnet sind, um ihre Drehung umzukehren.

## Revendications

1. Appareil de broyage de graines comprenant un dispositif de broyage (11) pourvu de moyen d'entraînement (12), un élément transporteur (13) capable de transporter une poudre desdites graines vers l'extérieur, et des moyens d'oscillation (35, 51) associés audit élément transporteur (13) et comprenant un élément propulseur (38) pourvu d'une came (37) verrouillée à un arbre (19) dudit moyen d'entraînement (12) et capable de transformer le mouvement généré par ledit moyen d'entraînement (12) en un mouvement de va-et-vient, et un élément actionneur (44) pourvu d'un élément suiveur de came (39) disposé entre ledit élément propulseur (38) et ledit élément transporteur (13) et capable de transmettre ledit mouvement de va-et-vient audit élément transporteur (13), dans lequel ladite came (37) comprend un corps rotatif (43) prévu avec un trou central (46), avec au moins une portion faisant saillie (57) en correspondance de laquelle un rayon de ladite came (37) présente une valeur maximale (Rmax) et une portion renfoncée (58) en aval de ladite portion faisant saillie (57) par rapport à une direction (D) de rotation, durant l'utilisation, de ladite came (37), **caractérisé en ce qu'**un élément de butée (59) constitué de matériau élastique est agencé en correspondance de ladite portion renfoncée (58).

2. Appareil (10) tel que selon la revendication 1, **caractérisé en ce que** ledit corps rotatif (43) comprend une rainure dans le périmètre (60) dans laquelle une rondelle d'étanchéité (61) est agencée d'une manière telle que, en correspondance avec ladite au moins une portion renfoncée (58), la rondelle d'étanchéité (61) fait saillie par rapport audit corps rotatif (43) et définit ledit élément de butée (59), tandis qu'en correspondance avec ladite au moins une portion faisant saillie (57) et au moins une partie des segments de raccordement la rondelle d'étanchéité (61) est disposée en affleurement ou en renfoncement par rapport audit corps rotatif (43).

3. Appareil (10) tel que selon la revendication 1 ou 2, **caractérisé en ce que** ledit élément actionneur (44) comprend un élément bille (62) agencé entre une surface dans le périmètre (46) de la came (37) et ledit élément suiveur de came (39).

4. Appareil (10) tel que selon l'une quelconque des revendications précédentes, **caractérisé en ce que** ledit moyen d'oscillation (35) comprend un élément de rétention élastique (40) agencé en coopération entre ledit élément propulseur (38) et ledit élément actionneur (44), et capable d'exercer une pression élastique sur ledit élément actionneur (44) afin de le maintenir normalement en contact avec ledit élément propulseur (38).

5. Appareil (10) tel que selon l'une quelconque des revendications précédentes, **caractérisé en ce que** ledit élément transporteur (13) est monté sur ledit dispositif de broyage (11) à l'aide de moyen de support (34) capable à la fois de définir un raccordement physique et stable, et de permettre un mouvement avec au moins un degré de liberté dudit élément transporteur (13) par rapport audit dispositif de broyage (11).

6. Appareil (10) tel que selon la revendication 5, **caractérisé en ce que** ledit moyen de support (34) comprend des éléments de blocage (32a) capables de fixer une première portion (21) dudit élément transporteur (13) audit dispositif de broyage (11), et au moins un élément élastique (31) capable d'amortir une seconde portion (22, 122) dudit élément transporteur (13) par rapport audit dispositif de broyage (11), durant le mouvement à fréquence alternante fourni par lesdits moyens d'oscillation (35, 51).

7. Appareil (10) tel que selon l'une quelconque des revendications précédentes, **caractérisé en ce que** ledit moyen d'oscillation inclut une unité de vibration (51) montée sur ledit élément transporteur (13) capable de générer ledit mouvement à fréquence alternante afin de transmettre simultanément et/ou sélectivement par rapport audit élément propulseur (38) ledit mouvement à fréquence alternante audit élément transporteur (13).

8. Appareil (10) tel que selon l'une quelconque des revendications précédentes, **caractérisé en ce qu'**il comprend un élément d'amortissement (65) positionné à l'intérieur dudit élément transporteur (13) et agencé transversalement vers une trajectoire de sortie de ladite substance en poudre.

9. Appareil (10) tel que selon la revendication 8, **caractérisé en ce que** ledit élément d'amortissement (65) est constitué sous la forme d'une feuille et comprend une première (66) et une seconde partie (67) inclinées l'une par rapport à l'autre.

10. Appareil tel que selon l'une quelconque des revendications précédentes, **caractérisé en ce qu'**un diffuseur (68) est agencé en correspondance d'une extrémité de sortie dudit élément transporteur (13), ledit diffuseur (68) étant configuré pour transporter la substance en poudre d'une manière telle qu'elle sort par gravité dans une direction sensiblement verticale.

11. Appareil (10) tel que selon l'une quelconque des revendications précédentes, **caractérisé en ce que** ledit élément transporteur (13) présente une forme d'arc, correspondant sensiblement à une trajectoire de sortie de la substance en poudre dudit dispositif de broyage (11).

12. Appareil (10) tel que selon la revendication 11, **caractérisé en ce que** ledit élément transporteur (13) comprend une paroi supérieure qui, en section, présente un développement sensiblement parabolique, et une paroi inférieure sensiblement rectiligne.

13. Appareil (10) tel que selon la revendication 11 ou 12, **caractérisé en ce que** ledit élément transporteur (13) présente une forme sensiblement tubulaire et est pourvu d'une première portion (126), se développant le long d'un premier segment (X1) orienté sensiblement parallèle à, et aligné avec, la direction à sortie prévalente de la substance en poudre depuis ledit dispositif de broyage (11), et une seconde portion (127), suivant ladite première portion (126), se développant le long d'un second segment (X2) incliné par rapport audit premier segment (X1) et orienté vers une zone de sortie de la substance en poudre.

14. Procédé de broyage de graines comprenant le broyage desdites graines dans un dispositif de broyage (11) tel que selon l'une quelconque des revendications de 1 à 13 afin d'obtenir une substance en poudre et de transporter ladite poudre vers l'extérieur avec un élément transporteur (13), **caractérisé en ce que** le procédé fournit une vibration dudit élément transporteur (13) au moins durant ledit broyage à l'aide desdits moyens d'oscillation (35, 51) associés à celui-ci.

15. Procédé tel que selon la revendication 14, **caractérisé en ce qu'**il fournit une vibration dudit élément transporteur (13) et/ou son maintien en vibration même à la fin dudit broyage, par entraînement des éléments de variation (52) fonctionnellement associés au moyen d'entraînement (12) dudit dispositif de broyage (11) afin d'inverser leur rotation.
